(19) **Europäisches Patentamt**

**European Patent Office**

**Office européen des brevets**

(11) **EP 1 379 770 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(51) Int Cl.7: **F02D 41/40**, F02D 41/34, F02P 5/04

(21) Anmeldenummer: **01274114.6**

(22) Anmeldetag: **18.12.2001**

(86) Internationale Anmeldenummer:
**PCT/DE2001/004740**

(87) Internationale Veröffentlichungsnummer:
**WO 2002/084096 (24.10.2002 Gazette 2002/43)**

(54) **VERFAHREN, COMPUTERPROGRAMM UND STEUER- UND/ODER REGELEINRICHTUNG ZUM BETREIBEN EINER BRENNKRAFTMASCHINE SOWIE BRENNKRAFTMASCHINE**

METHOD, COMPUTER PROGRAM, AND CONTROL AND/OR REGULATING DEVICE FOR OPERATING AN INTERNAL COMBUSTION ENGINE AND CORRESPONDING INTERNAL COMBUSTION ENGINE

PROCEDE, PROGRAMME INFORMATIQUE ET DISPOSITIF DE COMMANDE ET/OU REGULATION DESTINES A L'EXPLOITATION D'UN MOTEUR A COMBUSTION INTERNE ET MOTEUR A COMBUSTION INTERNE

(84) Benannte Vertragsstaaten:
**DE FR IT SE**

(30) Priorität: **12.04.2001 DE 10118264**

(43) Veröffentlichungstag der Anmeldung:
**14.01.2004 Patentblatt 2004/03**

(73) Patentinhaber: **ROBERT BOSCH GMBH**
**70442 Stuttgart (DE)**

(72) Erfinder: **WENZLER, Thomas**
**71296 Heimsheim (DE)**

(56) Entgegenhaltungen:
| | |
|---|---|
| **EP-A- 1 077 321** | **DE-A- 19 737 375** |
| **US-A- 5 394 331** | **US-A- 6 047 681** |

**Beschreibung**

Stand der Technik

Die vorliegende Erfindung betrifft ein Verfahren zum Betreiben einer Brennkraftmaschine, bei dem der Kraftstoff über mindestens ein Einspritzventil eingespritzt und die eingespritzte Kraftstoffmenge durch die Einspritzdauer beeinflusst wird.

Ein solches Verfahren ist vom Markt her bekannt. Bei ihm wird Kraftstoff über ein Einspritzventil in ein Ansaugrohr eingespritzt. Im Ansaugrohr vernebelt der eingespritzte Kraftstoff und wird'in einen Brennraum der Brennkraftmaschine transportiert. Der Kraftstoff wird dem Einspritzventil von einer Kraftstoffzuleitung zugeführt, die unter einem im Wesentlichen konstanten Druck steht. Wird z.B. vom Benutzer eine hohe Last angefordert, wird das Einspritzventil so angesteuert, dass es relativ lange geöffnet bleibt. Auf diese Weise gelangt eine größere Kraftstoffmenge in das Ansaugrohr.

Die maximal mögliche Einspritzdauer des Einspritzventils ist jedoch begrenzt. Bei Saugrohreinspritzung kann das Einspritzventil im Extremfall einfach dauernd geöffnet sein. Günstiger ist aber ein diskreter Öffnungsvorgang, da möglichst nicht ins offene Einlassventil eingespritzt werden soll. Bei offenem Einlassventil sollte das Einspritzventil also möglichst geschlossen sein. Der Zustand eines dauernd geöffneten Einspritzventils wird auch als "Dauerstrich" bezeichnet. Bei der ebenfalls vom Markt her bekannten Benzin-Direkteinspritzung wird der Kraftstoff direkt in den Brennraum eingespritzt. Dabei ist die maximal mögliche Einspritzdauer gleich der Dauer des Ansaugzuzüglich gegebenenfalls des Kompressionstaktes.

Wird vom Benutzer der Brennkraftmaschine eine hohe Last gefordert, also z.B. ein hohes Drehmoment bei gegebenenfalls hoher Drehzahl, kann es vorkommen, dass die geforderte Einspritzdauer des Einspritzventils größer ist als die maximal mögliche Einspritzdauer. Da die maximal mögliche Einspritzdauer jedoch motorbedingt begrenzt ist, wird trotz dieser höheren geforderten Einspritzdauer nur eine der maximal möglichen Einspritzdauer entsprechende Kraftstoffmenge eingespritzt. Gleichzeitig wird jedoch eine dem geforderten hohen Drehmoment entsprechende große Luftfüllung dem Brennraum zugeführt, so dass das in den Brennraum gelangende Gemisch insgesamt zu mager ist. Dies führt einerseits zu einem nicht optimalen Emissionsverhalten und andererseits zu einer erhöhten Temperatur der Brennkraftmaschine und des Abgases.

Ferner kann es dann, wenn bei steigender Drehzahl die tatsächliche Einspritzdauer durch die maximal mögliche Einspritzdauer begrenzt wird, zu einem plötzlichen Absinken des Drehmoments und somit zu einer plötzlichen Verlangsamung des Drehzahlanstiegs kommen. Dies wird beispielsweise in einem Kraftfahrzeug als Beschleunigungsruck von den Passagieren bzw. dem Fahrer wahrgenommen. Hierdurch wird der Komfort bei der Benutzung der Brennkraftmaschine eingeschränkt.

Die vorliegende Erfindung hat daher die Aufgabe, ein Verfahren der eingangs genannten Art so weiterzubilden, dass der Komfort bei der Benutzung einer solchermaßen betriebenen Brennkraftmaschine möglichst wenig eingeschränkt ist und gleichzeitig die Brennkraftmaschine ein optimales Emissionsverhalten zeigt.

Diese Aufgabe wird bei einem Verfahren der eingangs genannten Art dadurch gelöst, dass prädiziert wird, ob eine geforderte Einspritzdauer des Einspritzventils größer als eine maximal mögliche Einspritzdauer wird und dass dann, wenn die Prädiktion ergibt, dass ein solcher Fall droht, mindestens eine für die Verbrennung maßgebliche Größe derart beeinflusst wird, dass das Drehmoment sich sanft verringert.

Vorteile der Erfindung

Bei dem erfindungsgemäßen Verfahren wird also nicht gewartet, bis die tatsächliche Einspritzdauer durch die maximal mögliche Einspritzdauer zwangsweise begrenzt wird, sondern es wird bereits vor Erreichen eines solchen Zustandes eingegriffen. Hierzu ist erforderlich, dass eine Vorhersage erfolgt, ob ein solcher Zustand, in dem die geforderte Einspritzdauer des Einspritzventils größer ist als die maximal mögliche Einspritzdauer, mit hoher Wahrscheinlichkeit einzutreten droht. Ergibt die Vorhersage, dass ohne Durchführung entsprechender Maßnahmen tatsächlich ein solcher Zustand in naher Zukunft eintreten wird, wird bei dem erfindungsgemäßen Verfahren sofort reagiert: Dann wird eine Maßnahme eingeleitet, welche dazu beiträgt, dass die geforderte Einspritzdauer des Einspritzventils die maximal mögliche Einspritzdauer nicht übersteigen kann.

Diese Maßnahme ist ebenso einfach wie wirkungsvoll: Sie besteht nämlich darin, dass das von der Brennkraftmaschine erzeugte Drehmoment sanft reduziert wird. Unter einem "sanften" Reduzieren wird verstanden, dass die Reduktion des Drehmoments nicht aprupt, sondern kontinuierlich erfolgt, und die Änderungsgeschwindigkeit so klein ist, dass sie vom Benutzer der Brennkraftmaschine, beispielsweise den Insassen eines Kraftfahrzeugs, nicht als unangenehm empfunden wird. Die Reduktion des Drehmoments kann dabei so erfolgen, dass die tatsächliche Einspritzdauer so weit unterhalb der maximal möglichen Einspritzdauer bleibt, dass eine beispielsweise aus Emissionsgründen oder zur Absenkung der Abgastemperatur erforderliche Anfettung des Kraftstoff-Luftgemisches noch möglich ist.

Dabei sei darauf hingewiesen, dass die Verbesserung des Emissions- und Komfortverhaltens der erfindungsgemäß betriebenen Brennkraftmaschine durch das erfindungsgemäße Verfahren äußerst preiswert und einfach möglich ist, da keine zusätzlichen Komponenten erforderlich sind.

Vorteilhafte Weiterbildungen der Erfindung sind in Unteransprüchen angegeben.

In einer ersten Weiterbildung ist angegeben, dass die Verringerungsgeschwindigkeit des Drehmoments kleiner als ein Grenzwert ist. Der Betrag, um den sich das Drehmoment aufgrund dieser Maßnahme pro Zeit verringern kann, wird somit auf einen Maximalwert begrenzt. Durch diese Begrenzung der Änderungsgeschwindigkeit des Drehmoments wird erreicht, dass der Komfort bei der Benutzung der erfindungsgemäß betriebenen Brennkraftmaschine optimal ist. Bei einer in einem Kraftfahrzeug eingebauten Brennkraftmaschine kann die Änderungsgeschwindigkeit des Drehmoments beispielsweise so begrenzt werden, dass die durch die erfindungsgemäße Maßnahme erfolgende Änderung der Beschleunigung des Kraftfahrzeugs vom Fahrer und seinen Passagieren nicht als störend empfunden wird.

In einer anderen Weiterbildung ist angegeben, dass der Grenzwert für die Änderung des Drehmoments pro Zeit durch eine Wahrnehmungsschwelle eines Benutzers der Brennkraftmaschine bestimmt wird. Erfindungsgemäß wurde festgestellt, dass beispielsweise in einem Kraftfahrzeug Beschleunigungsänderungen von den Insassen nur ab einer bestimmten Stärke überhaupt wahrgenommen werden können. Durch die erfindungsgemäße Wahl des Grenzwerts wird dem Rechnung getragen. Im Extremfall kann so erreicht werden, dass die Verringerung des Drehmoments aufgrund der Beeinflussung der für die Verbrennung maßgeblichen Größe vom Benutzer der Brennkraftmaschine überhaupt nicht wahrgenommen wird.

Möglich ist auch, dass die Prädiktion durch einen Vergleich der Differenz zwischen maximal möglicher und geforderter Einspritzdauer mit einem Grenzwert und einem Vergleich der Änderungsgeschwindigkeit dieser Differenz mit einem Grenzwert erfolgt. Diese Art der Prädiktion eines drohenden Überschreitens der maximal möglichen Einspritzdauer des Einspritzventils ist besonders leicht zu realisieren. Sie basiert auf der Annahme, dass ein Überschreiten der maximal möglichen Einspritzdauer nur dann zu erwarten ist, wenn sich die geforderte Einspritzdauer des Einspritzventils bis auf einen bestimmten Wert der maximal möglichen Einspritzdauer genähert hat und wenn diese Annäherung mit einer bestimmten Mindestgeschwindigkeit erfolgt.

Dabei kann gemäß einer besonders bevorzugten Weiterbildung der Grenzwert für die Änderungsgeschwindigkeit der Differenz zwischen maximal möglicher und geforderter Einspritzdauer vom Betrag der Differenz abhängen. Hierdurch kann berücksichtigt werden, dass einerseits bei einer sehr hohen Änderungsgeschwindigkeit auch bei einem noch relativ großen Abstand der geforderten von der maximal möglichen Einspritzdauer ein Überschreiten der maximal möglichen Einspritzdauer droht, wohingegen andererseits ein solcher Zustand bei einem geringen Abstand zwischen maximal möglicher und geforderter Einspritzdauer auch bei kleiner Änderungsgeschwindigkeit drohen kann.

Bei einer anderen Weiterbildung des erfindungsgemäßen Verfahrens wird vorgeschlagen, dass die Prädiktion durch ein Beobachterverfahren, insbesondere ein Luenberger-Beobachterverfahren oder einen Kalman-Bucy-Filter, erfolgt.

Eine besonders relevante für die Verbrennung maßgebliche Größe ist die sich im Brennraum befindliche Luftfüllung. Daher wird erfindungsgemäß auch vorgeschlagen, dass die Beeinflussung in dem Falle, dass die Prädiktion ergibt, dass ein Überschreiten der maximal möglichen Einspritzdauer droht, die Veränderung einer Luftfüllung eines Brennraums umfasst. Dies kann besonders einfach durch die Verstellung des Winkels einer Drosselklappe erfolgen.

Möglich ist aber auch, dass die Beeinflussung die Absenkung eines Ladedrucks und/oder Saugrohrdrucks umfasst. Ersteres gilt natürlich nur für solche Brennkraftmaschinen, deren Ansaugluft vorverdichtet wird. Eine solche Absenkung des Ladedrucks ist beispielweise über ein sogenanntes Waste-Gate besonders einfach zu realisieren.

Alternativ oder zusätzlich hierzu kann die Beeinflussung auch eine Erhöhung des Kraftstoffdrucks umfassen.

Anstatt direkt die Luftfüllung des Brennraums zu beeinflussen, kann die Beeinflussung auch eine Reduzierung eines Soll-Drehmoments umfassen. In diesem Fall wird also nicht punktuell eine Komponente des Kraftstoff-Luftgemisches verändert, sondern deutlich früher in der Regelstrecke eingegriffen. Dies hat den Vorteil, dass die Gemischregelung selbst unberührt bleibt.

Besonders bevorzugt ist, dass die Beeinflussung mittels einer Kennlinie erfolgt, deren Eingangsgröße die Differenz zwischen geforderter und maximal möglicher Einspritzdauer ist. Auf diese Weise kann der Umfang der Beeinflussung auf einfache Art und Weise abhängig von dem aktuellen Betriebszustand der Brennkraftmaschine festgelegt werden.

Alternativ hierzu ist es auch möglich, dass die Beeinflussung mittels eines Reglers, insbesondere eines PD- oder eines PID-Reglers, erfolgt, dessen Regelgröße die Differenz zwischen geforderter und maximal möglicher Einspritzdauer ist. Mit einem solchen Regler kann die Beeinflussung einerseits sehr genau und andererseits äußerst sanft erfolgen.

Dabei ist besonders bevorzugt, wenn als zusätzliche Regelgröße die Änderungsgeschwindigkeit des Drehmoments verwendet wird. Dies ist für den Komfort beim erfindungsgemäßen Betrieb der Brennkraftmaschine nochmals zuträglich, da durch diese Maßnahme die Beeinflussung der für die Verbrennung maßgeblichen Größe situationsgerecht gerade so erfolgen kann, dass die Änderungsgeschwindigkeit in einem vom Benutzer nur gering oder überhaupt nicht wahrnehmbaren Bereich gehalten wird.

Die Erfindung betrifft auch ein Computerprogramm, welches zur Durchführung des obigen Verfahrens geeignet ist, wenn es auf einem Computer ausgeführt wird. Dabei wird besonders bevorzugt, wenn das Computerprogramm auf einem Speicher, insbesondere auf einem Flash-Memory, abgespeichert ist.

Die Erfindung betrifft ferner eine Steuer- und/oder Regeleinrichtung zum Betreiben einer Brennkraftmaschine mit mindestens einem Einspritzventil zur Zufuhr von Kraftstoff, welche einen Sollwert für die Einspritzdauer des Einspritzventils abgibt.

Um in allen Betriebssituationen der Brennkraftmaschine . einen emissions- und komfortoptimalen Betrieb gewährleisten zu können, wird erfindungsgemäß vorgeschlagen, dass die Steuer- und/oder Regeleinrichtung Mittel umfasst, welche prädizieren, ob eine geforderte Einspritzdauer des Einspritzventils größer als eine maximal mögliche Einspritzdauer wird, und dass sie Mittel umfasst, welche dann, wenn die Prädiktion ergibt, dass ein solcher Fall droht, mindestens eine für die Verbrennung maßgebliche Größe derart beeinflussen, dass das Drehmoment sich sanft verringert.

Besonders bevorzugt ist eine solche Steuer- und/oder Regeleinrichtung dann, wenn sie mit einem Computerprogramm der oben genannten Art versehen ist.

Schließlich betrifft die Erfindung noch eine Brennkraftmaschine mit mindestens einem Einspritzventil zur Zufuhr von Kraftstoff. Um bei einer solchen Brennkraftmaschine einen emissions- und komfortoptimalen Betrieb zu gewährleisten, wird vorgeschlagen, dass sie eine Steuer- und/oder Regeleinrichtung der oben genannten Art umfasst.

Zeichnung

Nachfolgend werden Ausführungsbeispiele der Erfindung unter Bezugnahme auf die beiliegende Zeichnung im Detail erläutert. In der Zeichnung zeigen:

Fig. 1:  ein Blockschaltbild einer Brennkraftmaschine;

Fig. 2:  ein Flussdiagramm eines Verfahrens zum Betreiben der Brennkraftmaschine von Fig. 1;

Fig. 3:  ein Flussdiagramm eines Ausschnitts aus dem Verfahren von Fig. 2;

Fig. 4:  ein Diagramm, in dem eine Drehzahl der Brennkraftmaschine von Fig. 1 über der Zeit dargestellt ist, wenn sie nach dem Verfahren von Fig. 2 betrieben wird;

Fig. 5:  ein Diagramm ähnlich Fig. 4, in dem eine geforderte Einspritzdauer sowie eine maximal mögliche Einspritzdauer über der Zeit aufgetragen sind;

Fig. 6:  ein Diagramm ähnlich Fig. 4, in dem ein Sollwert für eine Luftfüllung, ein entsprechendes Drehmoment und eine entsprechende Beschleunigungskraft aufgetragen sind; und

Fig. 7:  ein Diagramm ähnlich Fig. 4, in dem eine Änderung des Drehmoments pro Zeit (Änderungsgeschwindigkeit) und eine Änderung der entsprechenden Beschleunigungskraft pro Zeit über der Zeit aufgetragen sind.

Beschreibung der Ausführungsbeispiele

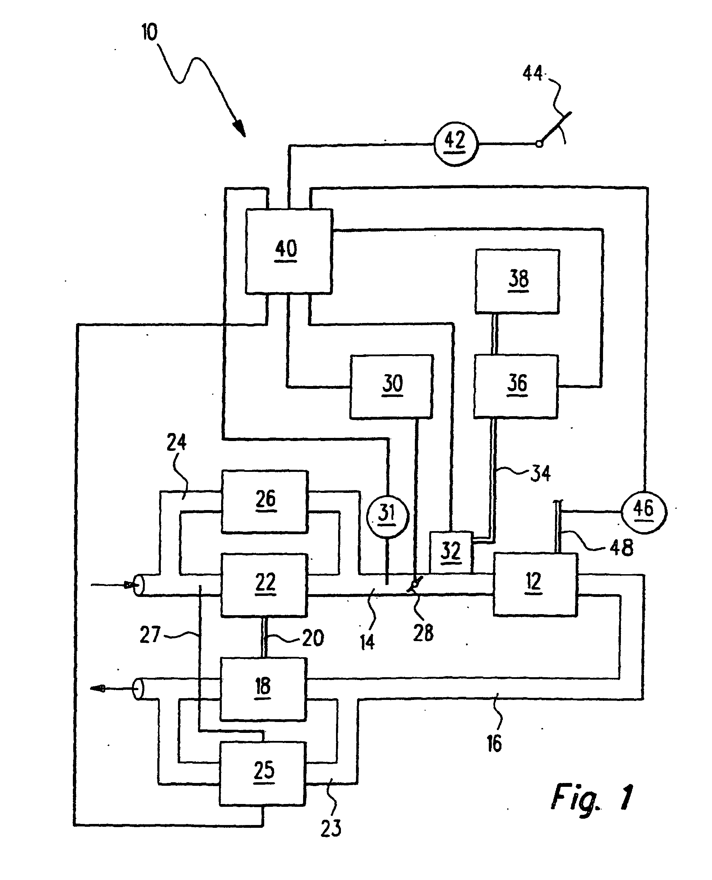

In Fig. 1 trägt eine Brennkraftmaschine insgesamt das Bezugszeichen 10. Sie umfasst einen'Brennraum 12, der über ein nicht dargestelltes Einlassventil mit einem Ansaugrohr 14 verbunden ist. Über ein ebenfalls nicht dargestelltes Auslassventil ist der Brennraum 12 ferner mit einem Abgasrohr 16 verbunden.

Im Abgasrohr 16 sitzt eine Turbine 18, die über eine Welle 20 einen Verdichter 22 antreibt. An der Turbine 18 führt eine Waste-Gate-Leitung 23 vorbei, in der ein Waste-Gate 25 sitzt. Dieses wird über den im Ansaugrohr 14 herrschenden Druck auf hier nicht näher interessierende Art und Weise angesteuert, was durch die Leitung 27 angedeutet ist. Der Verdichter 22 sitzt wiederum im Ansaugrohr 14. Stromaufwärts vom Verdichter 22 zweigt eine Umluftleitung 24 vom Ansaugrohr 14 ab, die stromabwärts vom Verdichter 22 wieder in das Ansaugrohr 14 mündet. In der Umluftleitung 24 ist ein Luftventil 26 angeordnet.

Im Ansaugrohr 14 ist ferner eine Drosselklappe 28 vorhanden, deren Winkelstellung von einem Stellmotor 30 eingestellt wird. Stromaufwärts von der Drosselklappe 28 ist ein Heißfilm-Luftmassenmesser (HFM-Sensor) 31 vorgesehen, der die durch das Ansaugrohr 14 strömende Luftmasse misst. Zwischen Drosselklappe 28 und Brennraum 12 ist ferner ein Einspritzventil 32 angeordnet, mit dem Kraftstoff in das Ansaugrohr 14 eingespritzt werden kann. Das Einspritzventil 32 wird über eine Kraftstoffleitung 34 und eine Kraftstoffpump- und Druckregeleinheit 36 aus einem Tank 38 gespeist.

Ein Steuer- und Regelgerät 40 ist eingangsseitig mit dem HFM-Sensor 31 und einem Stellungsgeber 42 eines Gaspedals 44 verbunden. Ferner erhält das Steuer- und Regelgerät 40 Signale von einem Drehzahlsensor 46, der die Drehzahl einer Kurbelwelle 48 abgreift. Ausgangsseitig ist das Steuer- und Regelgerät 40 mit dem Waste-Gate 25 in der Waste-Gate-Leitung 23, dem Stellmotor 30 der Drosselklappe 28, dem Einspritzventil 32 und der Kraftstoffpump- und Druckregeleinheit 36 verbunden.

Die in Fig. 1 dargestellte Brennkraftmaschine 10 ist in ein in der Zeichnung nicht dargestelltes Kraftfahrzeug eingebaut und treibt dieses an.

Im Normalfall wird die Brennkraftmaschine 10 folgendermaßen betrieben:

Während eines Ansaugtaktes wird Luft über das Ansaugrohr 14 angesaugt. Vom Steuer- und Regelgerät 40 wird abhängig von der vom Stellungsgeber 42 festgestellten Stellung des Gaspedals 44 eine vom Benutzer geforderte Last definiert und bei einem luftgeführten System der Stellmotor 30 der Drosselklappe 28 entsprechend angesteuert. Gegebenenfalls kann auch in die Ansteuerung des Waste-Gate 25 eingegriffen und hierdurch der Ladedruck eingestellt werden.

Das Einspritzventil 32 wird, abhängig von der vom HFM-Sensor 31 festgestellten Luftmasse, vom Steuer- und Regelgerät 40 so angesteuert, dass eine gewünschte .Gemischzusammensetzung erreicht wird. Es wird also eine bestimmte Menge Kraftstoff in das Ansaugrohr 14 eingespritzt. Die Kraftstoffmenge wird dabei durch die Öffnungsdauer des Einspritzventils 32 festgelegt. Das aus dem Brennraum 12 austretende Abgas treibt die Turbine 18 an, welche wiederum, in bestimmten Betriebszuständen der Brennkraftmaschine 10, über die Welle 20 den Verdichter 22 antreibt, der die Luft im Abgasrohr 16 vorverdichtet.

Es sei darauf hingewiesen, dass alternativ die Bestimmung des Luftmassenstroms auch durch einen Drucksensor im Saugrohr erfolgen kann.

Unter bestimmten Umständen kann es notwendig sein, den Druck im Ansaugrohr 14 abzusenken. Dies wird dadurch herbeigeführt, dass das Waste-Gate 25 so angesteuert wird, dass es öffnet. In diesem Fall kann Abgas an der Turbine 18 vorbeiströmen, so dass die Turbine 18 und in der Folge auch der Verdichter 22 weniger stark angetrieben werden.

Wie bereits oben ausgeführt worden ist, wird die eingespritzte Kraftstoffmenge durch die Dauer der Einspritzung durch das Einspritzventil 32 bestimmt. Je höher die Drehzahl der Brennkraftmaschine 10 ist, desto kürzer ist die Zeit, die für die Einspritzung des Kraftstoffes zur Verfügung steht. Insbesondere bei hoher Drehzahl und einer großen Leistungsanforderung (hohes Fahrer-Wunschmoment) durch den Benutzer der Brennkraftmaschine 10 kann eine Situation drohen, in der die zur Erzielung dieser Leistung erforderliche Kraftstoffmenge nicht eingespritzt werden kann, da zu wenig Zeit zum Einspritzen des Kraftstoffes zur Verfügung steht. In einem solchen Fall wäre also die geforderte Einspritzdauer des Einspritzventils 32 größer als eine maximal mögliche Einspritzdauer.

Eine derartige Situation kann z.B. auch dann eintreten, wenn die Brennkraftmaschine 10 bereits mit dauernd geöffnetem Einspritzventil 32 betrieben wird, aber zum Schutz der Turbine 18 vor Überhitzung eine Anfettung des Gemisches erfolgen soll, was wiederum zu einer Absenkung der Abgastemperaturen im Abgasrohr 16 führt. Auch in diesem Fall droht eine Situation, in der die geforderte Einspritzdauer des Einspritzventils 32 die maximal mögliche Einspritzdauer übersteigt.

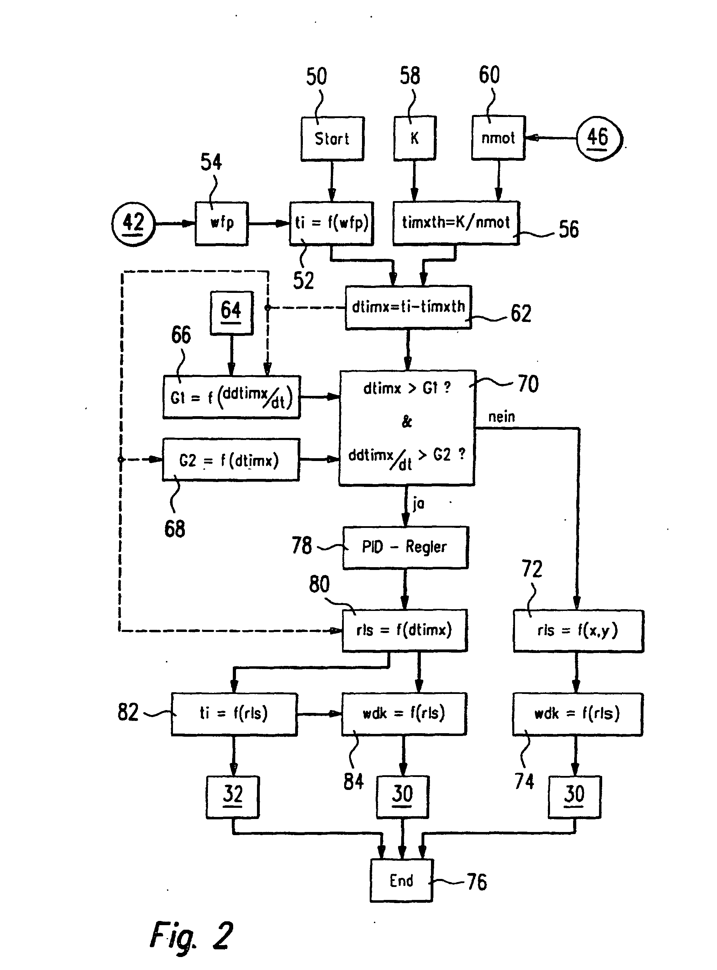

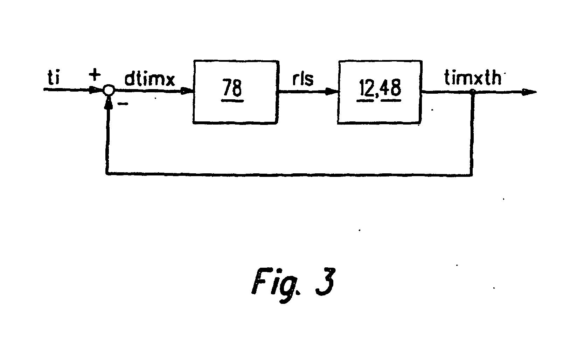

Um auch in den genannten Fällen die Brennkraftmaschine 10 emissions- und komfortoptimal betreiben zu können, wird entsprechend dem in den Fig. 2 und 3 dargestellten Verfahren vorgegangen (das Verfahren ist als Computerprogramm im Steuer- und Regelgerät 40 gespeichert) :

Nach einem Startblock 50 wird zunächst in einem Block 52 festgestellt, wie lang die Einspritzdauer ti sein muss, wenn die Leistung erzielt werden soll, die der vom Stellungsgeber 42 ermittelten Stellung wfp (Block 54) des Gaspedals 44 entspricht. Diese Bestimmung kann über den "Umweg" der über den HFM-Sensor 31 ermittelten Luftfüllung erfolgen. Hierzu wird zunächst aus der Stellung des Gaspedals 44 ein Soll-Drehmoment bestimmt. Aus diesem wird dann eine benötigte Luftfüllung ermittelt. Die Kraftstoffmasse bzw. die daraus resultierende Einspritzdauer wird aus der Luftfüllung und der Soll-Gemischzusammensetzung hergeleitet, wobei über die Soll-Gemischzusammensetzung beispielsweise die Abgastemperatur beeinflusst werden kann.

Parallel dazu wird in einem Block 56 der Quotient timxth aus einem Faktor K (Block 58) und der vom Drehzahlsensor 46 ermittelten Drehzahl nmot (Block 60) der Kurbelwelle 48 gebildet. Beim Faktor K handelt es sich um eine maschinenspezifische Größe, die sich aus der bei maximaler Drehzahl maximal möglichen Einspritzdauer ergibt. Letztlich entspricht der Faktor K dem maximalen Kurbelwinkel, der während einer Einspritzung überstrichen werden kann. Er enthält noch feste Umrechnungen, die sich aus den Einheiten ergeben. Der Quotient timxth entspricht der bei der aktuellen Drehzahl nmot maximal möglichen Einspritzdauer des Einspritzventils 32. Im Block 62 wird nun die Differenz dtimx zwischen der geforderten Einspritzdauer ti und der maximal möglichen Einspritzdauer timxth gebildet.

Mit den Signalen aus einem Zeitgeber 64 wird in einem Block 66 die Änderung der Differenz zwischen geforderter und maximal möglicher Einspritzdauer (dtimix) pro Zeit, also die Änderungsgeschwindigkeit ddtimx/dt, bestimmt und hieraus ein Grenzwert G1 für die Differenz dtimx gebildet. Außerdem wird aus der Differenz dtimx zwischen geforderter und maximal möglicher Einspritzdauer in einem Block 68 ein zweiter Grenzwert G2 für die Änderungsgeschwindigkeit ddtimx/dt gebildet. Die diesen Grenzwertbildungen zugrundeliegenden Überlegungen sind weiter unten im Detail ausgeführt.

Beide Grenzwerte werden in einen Block 70 eingespeist, in dem zwei Bedingungen abgeprüft werden: Zum einen wird geprüft, ob die Differenz dtimx zwischen geforderter und maximal möglicher Einspritzdauer betragsmäßig oberhalb des im Block 66 bestimmten Grenzwerts G1 liegt. Außerdem wird im Block 70 geprüft, ob die Geschwindigkeit ddtimx/dt, mit der sich die Differenz zwischen geforderter und maximal möglicher Einspritzdauer ändert, betragsmäßig oberhalb des im Block 68 bestimmten Grenzwerts G2 liegt.

Sind beide Bedingungen erfüllt, lautet die Anwort im Block 70 also "ja", dann bedeutet dies, dass ein Überschreiten der maximal möglichen Einspritzdauer timxth durch die geforderte Einspritzdauer ti prädiziert wird. Im Block 70 wird letztlich also festgestellt, ob, ohne entsprechende Gegenmaßnahmen, in naher Zukunft eine Situation eintreten wird, in der die geforderte Kraftstoffmenge aufgrund der Begrenzung durch die maximal mögliche Einspritzdauer timxth nicht mehr eingespritzt werden kann.

Die im Block 70 durchgeführte Prädiktion basiert auf folgenden Überlegungen:

Die Gefahr, dass die geforderte Einspritzdauer die maximal mögliche Einspritzdauer überschreitet, hängt im Wesentlichen von zwei Faktoren ab: Zum einen vom Abstand der aktuellen geforderten Einspritzdauer von der aktuell maximal möglichen Einspritzdauer und zum anderen von der Geschwindigkeit, mit der sich die aktuelle geforderte Einspritzdauer auf die aktuell maximal mögliche Einspritzdauer zubewegt.

Ist der Abstand zwischen der geforderten Einspritzdauer und der maximal möglichen Einspritzdauer relativ groß, kann eine relativ hohe Geschwindigkeit zugelassen werden, ohne dass gleich angenommen werden muss, dass die geforderte Einspritzdauer die maximal mögliche Einspritzdauer überschreiten wird. Ist der Abstand zwischen der geforderten Einspritzdauer und der maximal möglichen Einspritzdauer dagegen relativ klein, kann auch eine relativ geringe Geschwindigkeit, mit der sich die geforderte Einspritzdauer auf die maximal mögliche Einspritzdauer zubewegt, zu einem Überschreiten der maximal möglichen Einspritzdauer durch die geforderte Einspritzdauer führen.

Dies wird durch die Bestimmung der variablen Grenzwerte G1 und G2 in den Blöcken 66 und 68 berücksichtigt. Bei einer geringen Änderungsgeschwindigkeit wird im Block 66 ein höherer, also weniger "scharfer" Grenzwert ermittelt als bei einer entsprechend großen Geschwindigkeit. Im Block 68 wird bei einem großen Abstand dtimx ein entsprechend größerer, also ebenfalls weniger "scharfer" Grenzwert bestimmt als bei einem kleinen Abstand. Die Ermittlung der Grenzwerte G1 und G2 in den Blöcken 66 und 68 kann beispielsweise mit Hilfe von Kennlinien erfolgen.

Wird im Block 70 festgestellt, dass ein Überschreiten der maximal möglichen Einspritzdauer durch die geforderte Einspritzdauer nicht droht, dann lautet die Antwort "nein" und es wird im Block 72 die Luftfüllung im Brennraum 12 in üblicher Weise abhängig von den Parametern x, y, etc. festgelegt. Bei den Parametern x, y kann es sich beispielsweise um das geforderte Drehmoment, einen Umgebungsdruck usw. handeln. Die Ermittlung der Luftfüllung erfolgt vorzugsweise über ein oder mehrere Kennfelder. Aus der ermittelten Luftfüllung rls wird im Block 74 ein Winkel wdk für die Drosselklappe 28 bestimmt und der Stellmotor 30 entsprechend angesteuert. Das Verfahren endet im Endblock 76.

Ergibt die Prädiktion im Block 70 jedoch, dass ohne entsprechende Gegenmaßnahmen die geforderte Einspritzdauer die maximal mögliche Einspritzdauer zu übersteigen droht, dann lautet die Antwort im Block 70 "ja" und es erfolgt in einem PID-Regler im Block 78 eine Anpassung der Luftfüllung rls (vgl. Fig. 3). Als Regelgröße erhält der PID-Regler im Block 78 die Differenz dtimx zwischen geforderter Einspritzdauer ti und maximal möglicher Einspritzdauer timxth. Als Stellgröße ergibt sich im Block 80 eine Luftfüllung rls (bei der Stellgröße kann es sich auch um ein Soll-Drehmoment handeln, aus dem die Soll-Luftfüllung berechnet wird). Aus dem Sollwert rls für die Luftfüllung wird ein entsprechender Drosselklappenwinkel wdk im Block 84 bestimmt und der Stellmotor 30 entsprechend angesteuert. Die entsprechende tatsächliche Luftfüllung wird vom HFM-Sensor 31 erfasst und beispielsweise aus einem Kennfeld im Block 82 eine der gewünschten Gemischzusammensetzung entsprechende neue geforderte Einspritzdauer ti ermittelt.

Es sei darauf hingewiesen, dass in Fig. 2 im Block 80 aus Darstellungsgründen vereinfachend eine direkte Beziehung zwischen der Luftfüllung rls und der Einspritzdauer dtimx angegeben ist. Tatsächlich ist jedoch der Regler ein Operator auf dtimx. Im speziellen Fall eines PID-Reglers lautet die Beziehung dann

$$rls = f\left( \frac{d(dtimx)}{dt}, \int dtimx \cdot dt, dtimx \right)$$

Die Ansteuerung der Einspritzventile 32 erfolgt entsprechend der im Block 82 bestimmten geforderten Einspritzdauer ti. Über die Regelstrecke, welche beispielsweise den Brennraum 12 der Brennkraftmaschine 10 sowie die Kurbelwelle 48 umfasst, ergibt sich aus dem Drosselklappenwinkel wdk und der Einspritzdauer ti eine bestimmte Drehzahl nmot, welche wiederum zu einer bestimmten maximal möglichen Einspritzdauer timxth führt. Diese wird wieder im Sinne einer geschlossenen Regelstrecke zur Bildung der Regelgröße dtimx zurückgeführt.

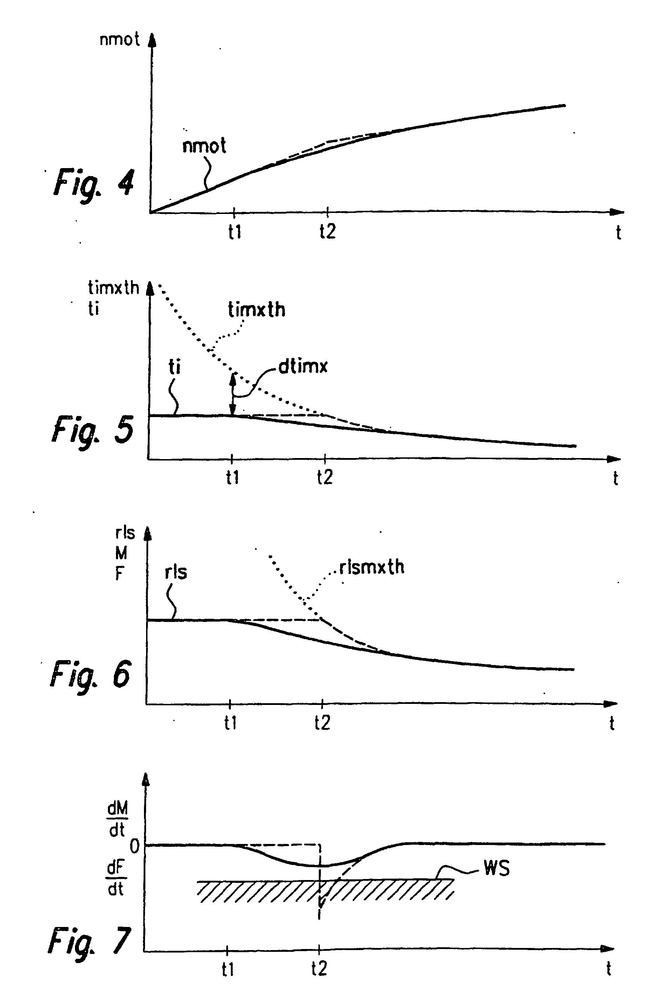

Die Wirkungsweise des in den Fig. 2 und 3 dargestellten Verfahrens wird nun unter Bezugnahme auf die Fig. 4 - 7 erläutert:

Es wird im Folgenden ein Fall angenommen, in dem der Benutzer der Brennkraftmaschine 10 das Gaspedal 44 konstant betätigt und das von der Brennkraftmaschine 10 angetriebene Kraftfahrzeug bei gleichmäßig ansteigender Drehzahl nmot der Brennkraftmaschine 10 gleichmäßig beschleunigt. Die maximal mögliche Einspritzdauer timxth ist reziprok zur Drehzahl. Bei dem in Fig. 4 dargestellten zunächst linearen Anstieg der Drehzahl nmot ergibt sich somit in Fig. 5 ein hyperbolischer Verlauf für die maximal mögliche Einspritzdauer timxth (gepunktet dargestellt). Die geforderte Einspritzdauer ti dagegen ist, wie aus Fig. 5 ersichtlich ist, zunächst konstant. Werden keine Maßnahmen eingeleitet, wird die Differenz dtimx zwischen geforderter Einspritzdauer ti und maximal möglicher Einspritzdauer timxth kontinuierlich geringer, bis sie zum Zeitpunkt t2 gleich Null wird.

Ab diesem Zeitpunkt t2 würde die Einspritzdauer durch die maximal mögliche Einspritzdauer timxth begrenzt werden. Entsprechend könnte die geforderte Einspritzdauer ti der maximal möglichen Einspritzdauer timxth nachgeführt werden, was sich jedoch durch einen Knick in der gestrichelt dargestellten Kurve ti zum Zeitpunkt t2 ausdrückt. Wenn eine bestimmte Gemischzusammensetzung beibehalten werden soll, muss auch der Sollwert rls für die Luftfüllung entsprechend auf einen maximalen Luftfüllungswert rlsmxth begrenzt werden (vgl. Fig. 6). Auch dies drückt sich durch einen Knick in der gestrichelt dargestellten Kurve für den Sollwert rls für die Luftfüllung im Brennraum 12 in Fig. 6 zum Zeitpunkt t2 aus.

Da das von der Brennkraftmaschine 10 abgegebene Drehmoment M und im Übrigen auch die auf das Fahrzeug und seine Insassen wirkende Beschleunigungskraft F in etwa als proportional zur Luftfüllung angesehen werden kann, weist auch das Drehmoment M und die entsprechende Beschleunigungskraft F zum Zeitpunkt t2 einen solchen Knick auf (jeweils gestrichelt dargestellt; aus Darstellungsgründen wurden für das Drehmoment M und die Beschleunigungskraft F in Fig. 6 keine eigenen Kurven eingetragen, sie entsprechen jedoch qualitativ der in Fig. 6 eingezeichneten Kurve für die Soll-Luftfüllung rls).

Die Änderung des Drehmoments M über der Zeit, also die Änderungsgeschwindigkeit dM/dt, sowie die Änderung der Beschleunigung F über der Zeit, also deren Änderungsgeschwindigkeit dF/dt, sind in Fig. 7 aufgetragen. Auch hier ist gestrichelt jener Fall dargestellt, welcher eintritt, wenn die geforderte Einspritzdauer ti schlagartig zum Zeitpunkt t2 durch die maximal mögliche Einspritzdauer timxth und die Luftfüllung begrenzt wird.

Da die zuvor konstante Beschleunigungskraft F aufgrund des geringer werdenden Drehmoments M ebenfalls geringer wird, ergibt sich der in Fig. 7 dargestellte Beschleunigungsruck, welcher die in Fig. 7 mit WS gekennzeichnete Wahrnehmungsschwelle überschreitet und daher von den Insassen des Kraftfahrzeugs deutlich wahrgenommen wird. Soll der Komfort für die Insassen verbessert werden, muss die Geschwindigkeit dF/dt, mit der sich die Beschleunigung F ändert, auf ein Maß begrenzt werden, welches von den Insassen des Kraftfahrzeugs nicht mehr wahrgenommen werden kann. Die Geschwindigkeit dF/dt muss daher oberhalb der Wahrnehmungsschwelle WS bleiben. Dies wird durch das in den Fig. 2 und 3 beschriebene Verfahren erreicht:

Wie bereits oben ausgeführt wurde, wird zu einem Zeitpunkt t1 prädiziert, dass, ohne entsprechende Gegenmaßnahmen, zum Zeitpunkt t2 die geforderte Einspritzdauer ti die maximal mögliche Einspritzdauer timxth überschreiten wird. Durch den PID-Regler im'Block 78 in den Fig. 2 und 3 wird daher bereits zum Zeitpunkt t1 das Drehmoment M in der Brennkraftmaschine 10 etwas abgesenkt, indem der Sollwert rls für die Luftfüllung im Block 80 in den Fig. 2 und 3 und davon abhängig wiederum die Einspritzdauer ti im Block 82 reduziert werden.

Wie aus den Fig. 4 - 6 ersichtlich ist, wird durch die PID-Regelung ein scharfer Knick in den entsprechenden Kurven vermieden und stattdessen ein sanfter Übergang geschaffen. Entsprechend weisen auch die Kurven für das Drehmoment M und die Beschleunigungskraft F keinen scharfen Knick auf, so dass in Fig. 7 auch kein entsprechender Ruck auftritt. Stattdessen erfolgt die Beschleunigungsänderung relativ sanft und die Änderungsgeschwindigkeit dM/dt bzw. dF/dt liegt betragsmäßig so, dass sie die Wahrnehmungsschwelle WS nicht überschreitet und somit von den Insassen des Kraftfahrzeugs überhaupt nicht wahrgenommen werden kann.

In einem nicht dargestellten Ausführungsbeispiel kann die Prädiktion eines Überschreitens der maximal möglichen Einspritzdauer im Block 70 auch durch ein Beobachterverfahren, insbesondere ein Luenberger-Beobachterverfahren oder einen Kalman-Bucy-Filter, erfolgen. Ferner kann anstelle einer Beeinflussung des Sollwertes rls für die Luftfüllung im Brennraum 12 der Brennkraftmaschine 10 auch der Ladedruck im Ansaugrohr 14 durch eine entsprechende Ansteuerung des Waste-Gate 25 erfolgen. Möglich ist auch, dass direkt ein Sollwert für das von der Brennkraftmaschine 10 zu leistende Drehmoment M reduziert wird. Grundsätzlich kann die Beeinflussung aller für die Verbrennung im Brennraum 12 maßgeblichen Größen mittels Kennlinien erfolgen.

Im oben beschriebenen Ausführungsbeispiel wurde als Regelgröße für den PID-Regler im Block 78 die Differenz dtimx zwischen geforderter Einspritzdauer ti und maximal möglicher Einspritzdauer timxth verwendet. Möglich ist aber auch, dass als zusätzliche Regelgröße die Änderungsgeschwindigkeit dM/dt des Drehmoments M verwendet wird.

Außerdem ist die Anwendung des beschriebenen Verfahrens nicht nur auf Brennkraftmaschinen mit Saugrohreinspritzung beschränkt, sondern kann auch bei Brennkraftmaschinen mit Benzin-Direkteinspritzung eingesetzt werden. Dort entspricht die maximal mögliche Einspritzdauer allerdings nicht dem "Dauerstrich", bei dem das Einspritzventil. ständig geöffnet ist, sondern einem durch den Motortakt vorgegebenen Einspritzfenster. Es versteht sich, dass das Verfahren gleichermaßen bei Benzin- und DieselBrennkraftmaschinen eingesetzt werden kann. Bei Diesel-Brennkraftmaschinen und bei Brennkraftmaschninen mit Benzin-Direkteinspritzung (im Schichtbetrieb) muss allerdings als Stellgröße anstelle der Luftfüllung die Kraftstoffmasse verwendet werden.

**Patentansprüche**

1. Verfahren zum Betreiben einer Brennkraftmaschine (10), bei dem der Kraftstoff über mindestens ein Einspritzventil (32) eingespritzt und die eingespritzte Kraftstoffmenge durch die Einspritzdauer beeinflusst wird, **dadurch gekennzeichnet, dass** prädiziert (70) wird, ob eine geforderte Einspritzdauer (ti) des Einspritzventils (32) größer als eine maximal mögliche Einspritzdauer (timxth) wird, und dass dann, wenn die Prädiktion (70) ergibt, dass ein solcher Fall droht, mindestens eine für die Verbrennung maßgebliche Größe (rls) so beeinflusst wird (70, 80, 84), dass das Drehmoment (M) sich sanft verringert.

2. Verfahren nach Anspruch 1, **dadurch gekennzeichnet, dass** die Veränderungssgeschwindigkeit (dM/dt) des Drehmoments (M) kleiner als ein Grenzwert ist.

3. Verfahren nach Anspruch 2, **dadurch gekennzeichnet, dass** der Grenzwert für die Änderung (dM) des Drehmoments (M) pro Zeit (dt) durch eine Wahrnehmungsschwelle (WS) eines Benutzers der Brennkraftmaschine (10) bestimmt wird.

4. Verfahren nach einem der vorhergehenden Ansprüche, **dadurch gekennzeichnet, dass** die Prädiktion (70) durch einen Vergleich der Differenz (dtimx) zwischen maximal möglicher Einspritzdauer (timxth) und geforderter Einspritzdauer (ti) mit einem Grenzwert (G1) und einen Vergleich der Änderungsgeschwindigkeit (ddtimx/dt) dieser Differenz mit einem Grenzwert (G2) erfolgt.

5. Verfahren nach Anspruch 4, **dadurch gekennzeichnet, dass** der Grenzwert (G2) für die Änderungsgeschwindigkeit (ddtimx/dt) der Differenz (dtimx) zwischen maximal möglicher Einspritzdauer (timxth) und geforderter Einspritzdauer (ti) vom Betrag der Differenz (dtimx) abhängt.

6. Verfahren nach einem der Ansprüche 1 bis 3, **dadurch gekennzeichnet, dass** die Prädiktion durch ein Beobachterverfahren, insbesondere ein Luenberger-Beobachterverfahren oder einen Kalman-Bucy-Filter, erfolgt.

7. Verfahren nach einem der vorhergehenden Ansprüche, **dadurch gekennzeichnet, dass** die Beeinflussung (78, 80, 84) die Veränderung (80) einer Luftfüllung (rl) eines Brennraums (12) umfasst.

8. Verfahren nach Anspruch 7, **dadurch gekennzeichnet, dass** die Beeinflussung (78, 80, 84) die Verstellung (84) des Winkels (wdk) einer Drosselklappe (28) umfasst.

9. Verfahren nach einem der Ansprüche 7 oder 9, **dadurch gekennzeichnet, dass** die Beeinflussung die Absenkung eines Ladedrucks und/oder Saugrohrdrucks umfasst.

10. Verfahren nach einem der vorhergehenden, Ansprüche, **dadurch gekennzeichnet, dass** die Beeinflussung eine Erhöhung des Kraftstoffdrucks umfasst.

11. Verfahren nach einem der vorhergehenden Ansprüche, **dadurch gekennzeichnet, dass** die Beeinflussung eine Reduzierung eines Soll-Drehmoments umfasst.

12. Verfahren nach einem der vorhergehenden Ansprüche, **dadurch gekennzeichnet, dass** die Beeinflussung mittels einer Kennlinie erfolgt, deren Eingangsgröße die Differenz zwischen geforderter und maximal möglicher Einspritzdauer ist.

**13.** Verfahren nach einem der Ansprüche 1 bis 11, **dadurch gekennzeichnet, dass** die Beeinflussung mittels eines Reglers, insbesondere eines PD- oder eines PID-Reglers (78), erfolgt, dessen Regelgröße die Differenz (dtimx) zwischen geforderter (timx) und maximal möglicher Einspritzdauer (timxth) ist.

**14.** Verfahren nach Anspruch 13, **dadurch gekennzeichnet, dass** als zusätzliche Regelgröße die Änderungsgeschwindigkeit des Drehmoments verwendet wird.

**15.** Computerprogramm, **dadurch gekennzeichnet, dass** es zur Durchführung des Verfahrens nach einem der Ansprüche 1 bis 14 geeignet ist, wenn es auf einem Computer ausgeführt wird.

**16.** Computerprogramm nach Anspruch 15, **dadurch gekennzeichnet, dass** es auf einem Speicher, insbesondere auf einem Flash-Memory, abgespeichert ist.

**17.** Steuer- und/oder Regeleinrichtung (40) zum Betreiben einer Brennkraftmaschine (10) mit mindestens einem Einspritzventil (32) zur Zufuhr von Kraftstoff, welche einen Sollwert (ti) für die Einspritzdauer des Einspritzventils abgibt, **dadurch gekennzeichnet, dass** sie Mittel umfasst, welche prädizieren (70), ob eine geforderte Einspritzdauer (ti) des Einspritzventils (32) größer als eine maximal mögliche Einspritzdauer (timxth) wird, und dass sie Mittel umfasst, welche dann, wenn die Prädiktion (70) ergibt, dass ein ein solcher Fall droht, mindestens eine für die Verbrennung maßgebliche Größe (rls) derart beeinflussen (78, 80, 84), dass das Drehmoment (M) sich sanft verringert).

**18.** Steuer- und/oder Regeleinrichtung nach Anspruch 17, **dadurch gekennzeichnet, dass** sie mit einem Computerprogramm nach einem der Ansprüche 15 oder 16 versehen ist.

**19.** Brennkraftmaschine mit mindestens einem Einspritzventil zur Zufuhr von Kraftstoff, **dadurch gekennzeichnet, dass** sie eine Steuer- und/oder Regeleinrichtung nach einem der Ansprüche 16 oder 17 umfasst.1.

## Claims

**1.** Method for operating an internal combustion engine (10), in which the fuel is injected by means of at least one injection valve (32) and the injected quantity of fuel is influenced by the injection period,
**characterized in that** it is predicted (70) whether a required injection period (ti) of the injection valve (32) is longer than a maximum possible injection period (timxth), and **in that**, if the prediction (70) states that there is a risk of such a case, at least one variable (rls) which is decisive for the combustion is influenced (70, 80, 84) in such a way that the torque (M) is reduced gently.

**2.** Method according to Claim 1, **characterized in that** the rate of change (dM/dt) of the torque (M) is smaller than a limiting value.

**3.** Method according to Claim 2, **characterized in that** the limiting value for the change (dM) of the torque (M) over time (dt) is determined by a perception threshold (WS) of a user of the internal combustion engine (10).

**4.** Method according to one of the preceding claims,
**characterized in that** the prediction (70) is carried out by comparing the difference (dtimx) between the maximum possible injection period (timxth) and the required injection period (ti) with a limiting value (G1) and a comparison of the rate of change (ddtimx/dt) of this difference with a limiting value (G2).

**5.** Method according to Claim 4, **characterized in that** the limiting value (G2) for the rate of change (ddtimx/dt) of the difference (dtimx) between the maximum possible injection period (timxth) and the required injection period (ti) depends on the absolute value of the difference (dtimx).

**6.** Method according to one of Claims 1 to 3,
**characterized in that** the prediction is carried out by means of an observer method, in particular a Luenberger observer method or a Kalman-Bucy filter.

**7.** Method according to one of the preceding claims,
**characterized in that** the influencing (78, 80, 84) includes changing (80) an air charge (rl) of a combustion chamber (12).

8. Method according to Claim 7, **characterized in that** the influencing (78, 80, 84) includes adjusting (84) the angle (wdk) of a throttle valve (28).

9. Method according to one of Claims 7 or 9,
   **characterized in that** the influencing includes reducing a charge pressure and/or intake manifold pressure.

10. Method according to one of the preceding claims,
    **characterized in that** the influencing includes increasing the fuel pressure.

11. Method according to one of the preceding claims,
    **characterized in that** the influencing includes reducing a setpoint torque.

12. Method according to one of the preceding claims,
    **characterized in that** the influencing is carried out by means of a characteristic curve whose input variable is the difference between the required injection period and the maximum possible injection period.

13. Method according to one of Claims 1 to 11,
    **characterized in that** the influencing is carried out by means of a controller, in particular a PD or a PID controller (78) whose control variable is the difference (dtimx) between the required injection period (timx) and the maximum possible injection period (timxth).

14. Method according to Claim 13, **characterized in that** the rate of change at the torque is used as an additional control variable.

15. Computer program, **characterized in that** it is suitable for carrying out the method according to one of Claims 1 to 14 if it is executed on a computer.

16. Computer program according to Claim 15,
    **characterized in that** it is stored on a memory, in particular on a Flash Memory.

17. Control device (40) for operating an internal combustion engine (10) having at least one injection valve (32) for supplying fuel, which outputs a setpoint value (ti) for the injection period of the injection valve, **characterized in that** it comprises means which predict (70) whether a required injection period (ti) of the injection valve (32) is longer than a maximum possible injection period (timxth), and **in that** it comprises means which, if the prediction (70) states that there is a risk of such a case, influence at least one variable (rls) which is decisive for the combustion in such a way that the torque (M) is reduced gently.

18. Control device according to Claim 17,
    **characterized in that** it is provided with a computer program according to one of Claims 15 or 16.

19. Internal combustion engine having at least one injection valve for supplying fuel, **characterized in that** it comprises a control device according to one of Claims 16 or 17.

**Revendications**

1. Procédé pour le fonctionnement d'un moteur à combustion interne (10), selon lequel le carburant est injecté à l'aide d'au moins un d'injecteur (32) et la quantité de carburant injectée est influencée par la durée d'injection, **caractérisé en ce qu'**
   on prédit (70) si une durée d'injection demandée (ti) de l'injecteur (32) est supérieure à une durée d'injection maximale possible (timxth), et lorsqu'il résulte de la prédiction (70) qu'un tel cas menace, au moins une grandeur de masse (rls) pour la combustion est influencée (78, 80, 84) pour réduire doucement le couple de rotation (M).

2. Procédé selon la revendication 1,
   **caractérisé en ce que**
   la vitesse de modification (dM/dt) du couple (M) est inférieure à une valeur limite.

**3.** Procédé selon la revendication 2,
**caractérisé en ce que**
la valeur limite de la modification (dM) du couple (M) par unité de temps (dt) est déterminée par un seuil de perception (WS) d'un utilisateur du moteur à combustion interne (10).

**4.** Procédé selon l'une quelconque des revendications précédentes,
**caractérisé en ce que**
la prédiction (70) est réalisée en comparant la différence (dtimx) entre la durée d'injection maximale possible (timxth) et la durée d'injection demandée (ti) à une valeur limite (G1) et en comparant la vitesse de modification (ddtimx/dt) de cette différence à une valeur limite (G2).

**5.** Procédé selon la revendication 4,
**caractérisé en ce que**
la valeur limite (G2) de la vitesse de modification (ddtimx/dt) de la différence (dtimx) entre la durée d'injection maximale possible (timxth) et la durée d'injection demandée (ti) dépend du montant de la différence (dtimx).

**6.** Procédé selon l'une quelconque des revendications 1 à 3,
**caractérisé en ce que**
la prédiction est réalisée par un procédé d'observation, notamment un procédé d'observation de Luenberger ou un filtre de Kalman-Bucy.

**7.** Procédé selon l'une quelconque des revendications précédentes,
**caractérisé en ce que**
l'influence (78, 80, 84) comprend la modification (80) d'un remplissage d'air (r1) d'une chambre à combustion (12).

**8.** Procédé selon la revendication 7,
**caractérisé en ce que**
l'influence (78, 80, 84) comprend le réglage (84) de l'angle (wdk) d'un clapet d'air (28).

**9.** Procédé selon l'une quelconque des revendications 7 ou 8,
**caractérisé en ce que**
l'influence comprend la baisse d'une pression d'admission et/ou de la pression d'un tuyau d'aspiration.

**10.** Procédé selon l'une quelconque des revendications précédentes,
**caractérisé en ce que**
l'influence comprend une augmentation de la pression de carburant.

**11.** Procédé selon l'une quelconque des revendications précédentes,
**caractérisé en ce que**
l'influence comprend une réduction d'un couple de consigne.

**12.** Procédé selon l'une quelconque des revendications précédentes,
**caractérisé en ce que**
l'influence est réalisée par une ligne caractéristique dont la grandeur d'entrée est la différence entre la durée d'injection demandée et la durée d'injection maximale possible.

**13.** Procédé selon l'une quelconque des revendications 1 à 11,
**caractérisé en ce que**
l'influence est réalisée au moyen d'un régulateur, notamment un régulateur PD à action proportionnelle dérivée ou un régulateur à triple action (PID) (78), dont la grandeur réglée est la différence (dtimx) entre la durée d'injection demandée (timx) et la durée d'injection maximale possible (timxth).

**14.** Procédé selon la revendication 13,
**caractérisé en ce que**
comme grandeur réglée supplémentaire, on utilise la vitesse de modification du couple.

**15.** Programme informatique,
**caractérisé en ce qu'**

il est adapté à la réalisation du procédé selon l'une quelconque des revendications 1 à 14 lorsqu'il est exécuté sur un ordinateur.

16. Programme informatique selon la revendication 15,
**caractérisé en ce qu'**
il est mémorisé dans une mémoire, notamment une mémoire flash.

17. Dispositif de commande et/ou de régulation (40) pour le fonctionnement d'un moteur à combustion interne (10) qui pour au moins un injecteur (32) d'alimentation en carburant, délivre une valeur de consigne (ti) pour la durée d'injection de l'injecteur,
**caractérisé en ce qu'**
il comprend des moyens qui prédisent (70) si une durée d'injection demandée (ti) de l'injecteur (32) est supérieure à une durée d'injection maximale possible (timxth), et des moyens qui, lorsqu'il résulte de la prédiction (70) qu'un tel cas menace, influencent (78, 80, 84) au moins une grandeur de masse (rls) pour la combustion de façon à réduire doucement le couple (M).

18. Dispositif de commande et/ou de régulation selon la revendication 17,
**caractérisé en ce qu'**
il est doté d'un programme informatique selon l'une quelconque des revendications 15 ou 16.

19. Moteur à combustion interne comportant au moins un d'injecteur pour l'alimentation en carburant,
**caractérisé en ce qu'**
il comprend un dispositif de commande et/ou de régulation selon l'une quelconque des revendications 17 ou 18.

Fig. 1

Fig. 2

ti $+$ dtimx $\boxed{\underline{78}}$ rls $\boxed{\underline{12,48}}$ timxth $-$

# Fig. 3

Fig. 4

Fig. 5

Fig. 6

Fig. 7